# EUROPÄISCHE PATENTSCHRIFT

(11) **EP 0 714 037 B1**
(45) Veröffentlichungstag und Bekanntmachung des Hinweises auf die Patenterteilung: **13.02.2002**
(21) Anmeldenummer: 95203139.1
(22) Anmeldetag: 16.11.1995
(51) Int. Cl.: G01T 1/29, G01T 1/36, G01N 23/201

(54) **Anordnung zum Messen des Impulsübertragsspektrums von elastisch gestreuten Röntgenquanten**
Arrangement for the measurement of the momentum transfer spectrum of elastically scattered X-ray quanta
Dispositif pour mesurer le spectre de transmission d'impulsions de quanta de rayons dispersés élastiquement

(30) Priorität: 24.11.1994 DE 4441843
(43) Veröffentlichungstag der Anmeldung: 29.05.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Harding, Goeffrey, Dr., c/o Philips, D-22335 Hamburg (DE)
(74) Vertreter: Hartmann, Heinrich, Dipl.-Ing.

(56) Entgegenhaltungen:
- DE-A- 4 203 354
- DE-A- 4 222 227
- US-A- 4 750 196
- US-A- 5 231 652

## Beschreibung

Die Erfindung betrifft eine Anordnung zum Messen des Impulsübertragsspektrums von elastisch aus einem Untersuchungsbereich gestreuten Röntgenquanten gemäß dem Oberbegriff des Anspruchs 1. Eine solche, aus der DE-A 42 22 227 bekannte Anordnung kann beispielsweise in einem Gepäckstück bestimmte Stoffe, wie insbesondere kristalline Stoffe (Sprengstoffe) anhand ihres Impulsübertragsspektrums identifizieren. Die von einem einzigen Röntgenstrahler erzeugte polychromatische Röntgenstrahlung wird dabei mit Hilfe einer Schlitzöffnung in einer Primärblendenplatte zu einem kegelförmigen Primärstrahl gebündelt. Die im Untersuchungsbereich gestreute Strahlung wird durch Abbildungsschlitze einer Sekundär... blendenanordnung, die aus einer oder mehreren Blendenplatten bestehen kann, auf einen aus mehreren Elementen bestehenden Detektor abgebildet. Bei einem Öffnungshalbwinkel des Primärstrahlenbündels von 0,0309 rad, einem Abstand der Primärblendenplatte vom Strahler von 1.187 mm und einer Dicke des Untersuchungsbereichs in Strahlrichtung von 500 mm ergibt sich der Durchmesser des Primärstrahlenbündels ungefähr in der Mitte des Untersuchungsbereichs (d.h. im Abstand von 250 mm von der Primärblendenplatte) zu etwa 90 mm. Da im allgemeinen die zu untersuchenden Objekte wesentlich größere Abmessungen aufweisen, ist eine mäanderförmige Abtastbewegung erforderlich, bei der nacheinander alle Bereiche des Objekts untersucht werden.

Der Erfindung liegt die Aufgabe zugrunde, eine Anordnung der eingangs genannten Art so auszubilden, daß die Untersuchung eines Objekts mit geringerem Zeitaufwand möglich ist.

Diese Aufgabe wird erfindungsgemäß dadurch gelöst, daß ein zweiter Röntgenstrahler vorgesehen ist, welcher im wesentlichen in gleich großem Abstand von der Detektorebene wie der erste Röntgenstrahler derart angeordnet ist, daß eine den zweiten Röntgenstrahler und den Detektor-Mittelpunkt verbindende zweite Strahlachse die erste Strahlachse unter einem Winkel schneidet und mit dieser ein Strahlachsenpaar bildet, daß beiden Strahlachsen primäre und sekundäre Schlitzöffnungen zugeordnet sind und daß alle sich um die erste Strahlachse erstreckenden primären und sekundären Schlitzöffnungen in entgegengesetzter Richtung zu der von dem Strahlachsenpaar definierten Ebene geöffnet sind wie die sich um die zweite Strahlachse erstreckenden primären und sekundären Schlitzöffnungen, wobei die beiden Enden jeder halbringförmigen Schlitzöffnung etwa in der von dem Strahlachsenpaar definierten Ebene liegen.

Während bei der bekannten Anordnung nur ein etwa 90 mm breiter Bereich des Objekts gleichzeitig von einem Primärstrahlenbündel erfaßt wird, wird bei der erfindungsgemäßen Anordnung eine Verbreiterung dieses Bereichs erreicht. Da die Schlitzöffnungen der Primärblendenanordnung im wesentlichen halbringförmig ausgebildet sind, werden Primärstrahlenbündel erzeugt, die den Untersuchungsbereich auf den Mantelflächen von versetzt nebeneinanderliegenden Halbkegeln durchsetzen. Die ebenfalls halbringförmig ausgebildeten sekundären Schlitzöffnungen bilden den Untersuchungsbereich auf den Detektor ab.

Die Ausgestaltung nach Anspruch 2 hat den Vorteil, daß im Untersuchungsbereich zwischen zwei von verschiedenen Röntgenstrahlern ausgehenden Primärstrahlenbündeln, deren Streustrahlung auf den gleichen Detektor fällt, der Bereich möglichst klein gehalten wird, der nicht von einem dieser Primärstrahlenbündel durchstrahlt wird. Da der Winkel, unter dem sich zwei Strahlachsen schneiden, sehr gering ist, spielt es praktisch keine Rolle, wo im Untersuchungsbereich, d.h. in welchem Abstand von der Detektorebene, die zwei Primärstrahlenbündel aneinandergrenzen.

Bevorzugt befinden sich die primären und/oder die sekundären Schlitzöffnungen jeweils in einer einzigen ebenen Blendenplatte, was eine besonders einfache Herstellung der... Blendenanordnungen erlaubt. Die Blendenplatten bestehen aus Röntgenstrahlung absorbierendem Material und/oder sind so dick, daß nur durch die Schlitzöffnungen Röntgenstrahlung fallen kann.

Weiterhin ist in einer Ausgestaltung vorgesehen, daß die sekundären Schlitzöffnungen so angeordnet sind, daß die im wesentlichen in einer parallel zur Detektorebene liegenden Ebene des Untersuchungsbereichs gestreute Streustrahlung des ersten Primärstrahlenbündels auf dasselbe ringförmige Element eines Detektors gelangt wie die in der gleichen Ebene im Untersuchungsbereich gestreute Streustrahlung des zweiten Primärstrahlenbündels. Dadurch ist gewährleistet, daß die auf ein bestimmtes ringförmiges Element eines Detektors treffende Streustrahlung unter einem relativ genau definierten Streuwinkel im Untersuchungsbereich gestreut wird.

Aus demselben Grund müssen Streustrahlen unterdrückt werden, die unter einem relativ großen Winkel zu einer Ebene, welche eine Strahlachse enthält, verlaufen. Dazu sieht eine Weiterbildung der Erfindung vor, daß zwischen dem Untersuchungsbereich und dem Detektor zwei jeweils einer Strahlachse zugeordnete Kollimatoranordnungen mit die Röntgenstrahlung absorbierenden Lamellen vorgesehen sind und daß die Lamellen in Ebenen liegen, die eine Strahlachse enthalten.

Um außerdem zu verhindern, daß Streustrahlung des ersten Primärstrahlenbündels auf die Detektorhälfte fällt, welche zur Erfassung der Streustrahlung des zweiten Primärstrahlenbündels bestimmt ist, ist ferner vorgesehen, daß die Lamellen der beiden Kollimatoranordnungen durch eine metallische Trennwand getrennt sind, die in einer Ebene verläuft, in der die beiden Strahlachsen liegen. Die metallische Trennwand besteht ebenso wie die Lamellen der Kollimatoranordnung aus Röntgenstrahlung absorbierendem Material.

Eine Weiterbildung der Erfindung sieht vor, daß mindestens ein weiterer Detektor vorgesehen ist und daß die Primärblendenanordnung je Detektor zwei Schlitzöffnungen aufweist. Je größer die Anzahl der Detektoren ist, desto größer kann die Anzahl der nebeneinander den Untersuchungsbereich durchsetzenden halbkegelförmigen Primärstrahlenbündel gewählt und damit der gleichzeitig durchstrahlte Bereich verbreitert werden.

Bei einer vorzugswürdigen Ausgestaltung sind alle primären und sekundären Schlitzöffnungen und alle Detektoren derart angeordnet, daß alle die beiden Röntgenstrahler mit den Mittelpunkten der Detektoren verbindenden Strahlachsen in einer einzigen Ebene liegen. Im Hinblick darauf, den gleichzeitig von mehreren Primärstrahlenbündeln durchsetzten Bereich möglichst breit auszulegen, ist diese Ausgestaltung vorteilhaft.

Eine besonders vorteilhafte Ausgestaltung der Erfindung sieht zusätzlich dazu vor, daß vier Detektoren vorgesehen sind und daß die Primärblendenanordnung acht halbringförmige Schlitzöffnungen aufweist. Es kann dann ein Bereich etwa der Breite 720 mm gleichzeitig untersucht werden. Da im allgemeinen Gepäckstücke mit einer maximalen Breite von 700 mm zu untersuchen sind, kann bei dieser Ausgestaltung auf die mäanderförmige zweidimensionale Abtastbewegung verzichtet werden. Es genügt eine eindimensionale Abtastbewegung zur vollständigen Untersuchung eines derartigen Gepäckstücks, was einerseits eine einfachere Vorrichtung zur Bewegung des Gepäckstücks gegenüber der Untersuchungseinrichtung ermöglicht und andererseits zu einer erheblichen Zeitersparnis führt.

Die Erfindung wird nachfolgend anhand der Zeichnungen näher erläutert. Es zeigen:
- Fig. 1: eine erste Ausführungsform der Erfindung in schematischer Darstellung,
- Fig. 2: eine einfache Ausführungsform der Primärblendenanordnung,
- Fig. 3: eine einfache Ausführungsform der Sekundärblendenanordnung,
- Fig. 4: einen aus zwölf ringförmigen Elementen bestehenden Detektor,
- Fig. 5: eine Ausführungsform einer Kollimatoranordnung,
- Fig. 6: eine schematische Darstellung einer Anordnung mit vier Detektoren,
- Fig. 7: eine Primärblendenplatte für eine Anordnung mit vier Detektoren und
- Fig. 8: eine alternative Ausführungsform der Primärblendenplatte für eine Anordnung mit zwei Detektoren.

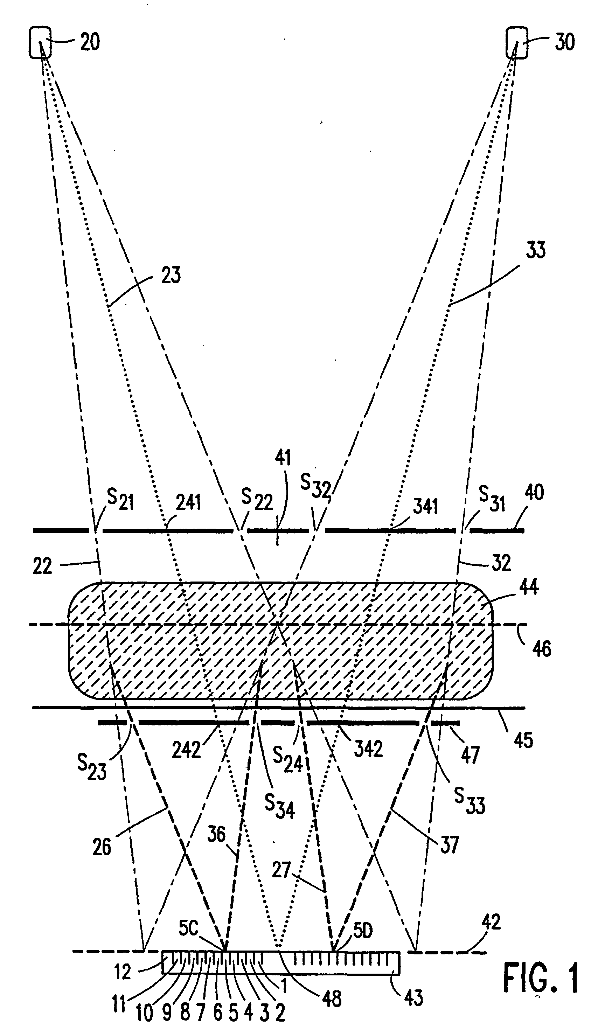

Die in den Figuren 1 und 6 dargestellten Ausführungsformen sind nicht maßstabsgerecht dargestellt, sondern die Abmessungen in horizontaler Richtung sind im Vergleich zu den Abmessungen in vertikaler Richtung der Übersichtlichkeit halber stark vergrößert.

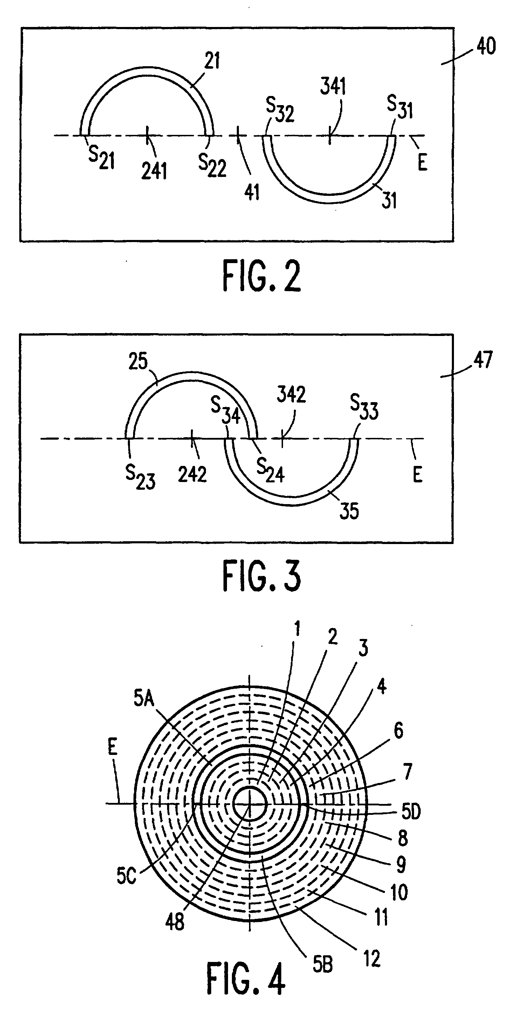

Mit 20 und 30 sind in Fig. 1 zwei gleichartige Röntgenstrahler zur Erzeugung polychromatischer Röntgenstrahlung bezeichnet. Die Röntgenstrahlung fällt auf eine ebene Primärblendenplatte 40, die, wie in der weiter unten beschriebenen Fig. 2 gezeigt, zwei im wesentlichen halbringförmig ausgebildete Schlitzöffnungen 21 und 31 aufweist, so daß hinter der Primärblendenplatte 40 zwei Primärstrahlenbündel 22 und 32 ausgeblendet werden. In Fig. 1 sind von den primären Schlitzöffnungen 21 und 31 nur die in Fig. 2 mit S₂₁ und S₂₂ bzw. S₃₁ und S₃₂ bezeichneten Stellen zu erkennen.

Der Untersuchungsbereich, in dem sich das zu untersuchende Objekt 44, beispielsweise ein Koffer, befindet, wird durch die Primärblendenplatte 40 und eine dazu parallele, für Röntgenstrahlung transparente Platte 45 beispielsweise eines Förderbandes, die weiter entfernt ist von den Röntgenstrahlern 20 und 30 als die Primärblendenplatte 40 und von dieser beispielsweise einen Abstand von 500 mm aufweist, begrenzt. In der Ebene 46, die im gezeigten Fall mittig zwischen diesen beiden Platten 40 und 45 liegt, grenzen die Primärstrahlenbündel 22 und 32 aneinander. Die beiden Primärstrahlenbündel 22 und 32 haben jeweils die Form der Mantelfläche eines halben Kegelstumpfes, wobei einer der halben Kegelstümpfe aus der Zeichenebene herausragt und der andere halbe Kegelstumpf in die Zeichenebene hineinragt.

Zwischen der Platte 45 und dem Detektor 43 befindet sich eine ebene Sekundärblendenplatte 47, die, wie in der weiter unten beschriebenen Fig. 3 gezeigt, im wesentlichen halbringförmig ausgebildete sekundäre Schlitzöffnungen 25 und 35 aufweist. In Fig. 1 sind von den sekundären Schlitzöffnungen 25 und 35 nur die in Fig. 3 mit S₂₃ und S₂₄ bzw. S₃₃ und S₃₄ bezeichneten Stellen zu erkennen.

Die Detektoreinrichtung besteht im gezeigten Fall aus einem einzigen, in einer zur Primärblendenplatte 40 und zur Sekundärblendenplatte 47 parallelen Detektorebene 42 liegenden Detektor 43. Dieser enthält zwölf ringförmige, konzentrisch einen Detektor-Mittelpunkt 48 umschließende Detektorelemente 1...12. Der Mittelpunkt 48 ist der Schnittpunkt zweier Strahlachsen 23 und 33, die durch je einen der Röntgenstrahler 20 und 30 verlaufen und ein Strahlachsenpaar bilden. Die Strahlachsen 23 und 33 schneiden die Primärblendenplatte 40 in den Punkten 241 bzw. 341 und die Sekundärblendenplatte in den Punkten 242 bzw. 342. Die Schlitze S₂₁ und S₂₂ sind in gleichem Abstand vom Schnittpunkt 241 angeordnet, ebenso weisen die Schlitze S₃₁ und S₃₂ den gleichen Abstand vom Schnittpunkt 341 auf. Die gleiche Aussage gilt für die Schlitze S₂₃ und S₂₄ bzw. S₃₃ und S₃₄ bezüglich der Schnittpunkte 242 bzw. 342. Die Strahlachsen 23 und 33 verlaufen demnach im Zentrum des halbkegelförmigen Primärstrahlenbündels 22 bzw. 32.

Da sich die Strahlachsen 23 und 33 in der Detektorebene 42 im Punkt 48 schneiden, ist zur Erfassung der Streustrahlung von beiden Primärstrahlenbündeln 22 und 32 nur ein Detektor 43 erforderlich. Im gezeigten Fall erzeugt das Primärstrahlenbündel 22 Streustrahlen 26 und 27, die durch die Schlitze S₂₃ und S₂₄ auf dasselbe ringförmige Detektorelement 5 fallen wie die durch das Primärstrahlenbündel 32 erzeugten Streustrahlen 36 und 37, die durch die Schlitze S₃₃ und S₃₄ auf das Detektorelement 5 fallen. Die Streustrahlung, die im Untersuchungsbereich im wesentlichen in einer zur Detektorebene 42 parallelen Ebene - beispielsweise in einem Bereich um die Ebene 46 - erzeugt wird, fällt in der Detektorebene 42 auf ein bestimmtes ringförmiges Detektorelement, unabhängig davon, von welchem der Primärstrahlenbündel 22 und 32 die Streustrahlung erzeugt wurde.

Die Röntgenstrahler 20 und 30 sind in einem Abstand von 2500 mm von der Detektorebene 42 angeordnet, wobei es nicht erforderlich ist, daß beide Röntgenstrahler exakt den gleichen Abstand aufweisen. Der Abstand der Röntgenstrahler 20 und 30 von der Primärblendenplatte 40 beträgt 1187 mm, der Abstand zwischen der Primärblendenplatte 40 und Platte 45 beträgt 500 mm. Die Röntgenstrahler 20 und 30 sind im Abstand von etwa 180 mm voneinander angeordnet.

In Fig. 2 ist die Primärblendenplatte 40 in einer Draufsicht dargestellt. Mit der Gerade E ist die Zeichenebene aus Fig. 1 angedeutet, welche senkrecht auf der Primärblendenplatte 40 steht und gleichzeitig die Ebene ist, die von dem aus den Strahlachsen 23 und 33 gebildeten Strahlachsenpaar definiert ist. Die Schnittpunkte der Strahlachsen 23 und 33 mit der Primärblendenplatte 40 sind mit 241 bzw. 341 bezeichnet. Erkennbar ist die halbringförmige Ausgestaltung der primären Schlitzöffnungen 21 und 31 um die Mittelpunkte 241 bzw. 341 mit den Enden S₂₁ und S₂₂ bzw. S₃₁ und S₃₂, welche in der mit E angedeuteten Ebene liegen. Die Schlitzöffnungen 21 und 31 sind dabei derart angeordnet, daß sie in entgegengesetzter Richtung zur mit E angedeuteten Ebene geöffnet sind und punktsymmetrisch zum Punkt 41 verlaufen. Der Punkt 41 ergibt sich dabei in der Primärblendenplatte 40 als Durchstoßpunkt einer Gerade, welche im Detektor-Mittelpunkt 48 senkrecht auf der Detektorebene 42 (siehe Fig. 1) steht und die Verbindungslinie der beiden Röntgenstrahler 20 und 30 mittig schneidet.

Die Fig. 3 zeigt die Sekundärblendenplatte 47 in einer Draufsicht. Die halbringförmig ausgebildeten sekundären Schlitzöffnungen 25 und 35 öffnen sich ebenfalls in entgegengesetzter Richtung zur mit E angedeuteten Ebene und verlaufen um die Strahlachsen 23 bzw. 33 (siehe Fig. 1), deren Schnittpunkte mit der Sekundärblendenplatte 47 mit 242 bzw. 342 bezeichnet sind, wobei die sekundäre Schlitzöffnung 25 in derselben Richtung zur mit E angedeuteten Ebene geöffnet ist wie die primäre Schlitzöffnung 21 aus Fig. 2. Auch bei den sekundären Schlitzöffnungen 25 und 35 liegen die Enden S₂₃ und S₂₄ bzw. S₃₃ und S₃₄ in der mit E angedeuteten Ebene.

Die primären und sekundären Schlitzöffnungen 21 und 31 (siehe Fig. 2) bzw. 25 und 35 (siehe Fig. 3) müssen nicht exakt die Form eines halben Kreisringes aufweisen, sondern sollen im wesentlichen halbringförmig ausgebildet sein, wobei auch Schlitzöffnungen eingeschlossen sind, die die Form einer halben Ellipse aufweisen. Aufgrund des geringen Öffnungshalbwinkels der Röntgenstrahlung von 0,0309 rad und des großen Abstands der Röntgenstrahler 20 und 30 von der Primärblendenplatte 40 von 1187 mm werden in der Praxis die primären und sekundären Schlitzöffnungen 21 und 31 bzw. 25 und 35 zwecks einfacherer Herstellung halbringförmig ausgebildet sein, obgleich theoretisch eine schwache elliptische Verformung erforderlich wäre.

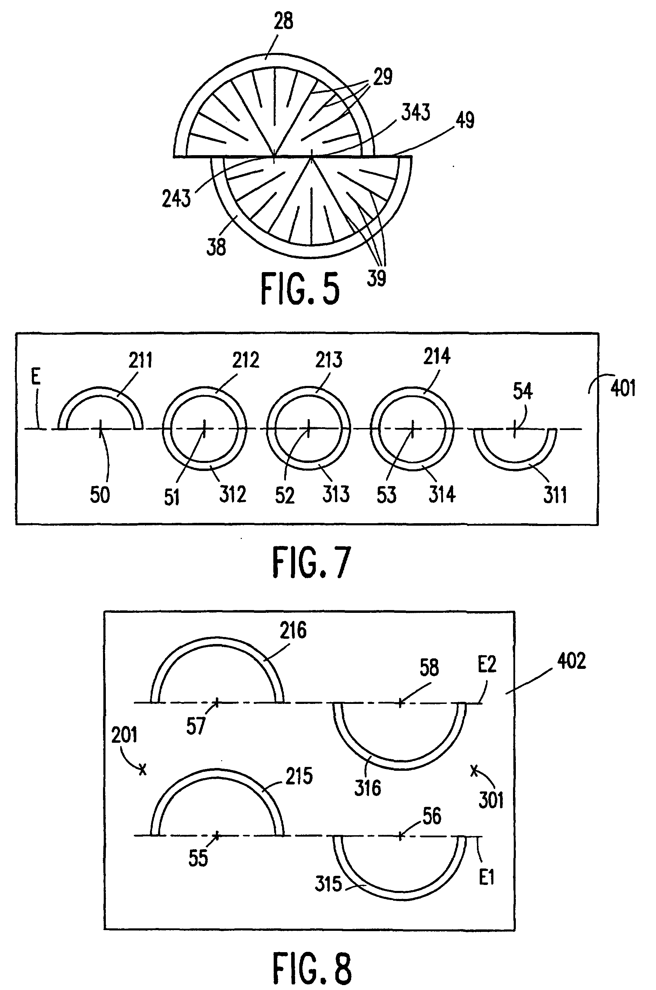

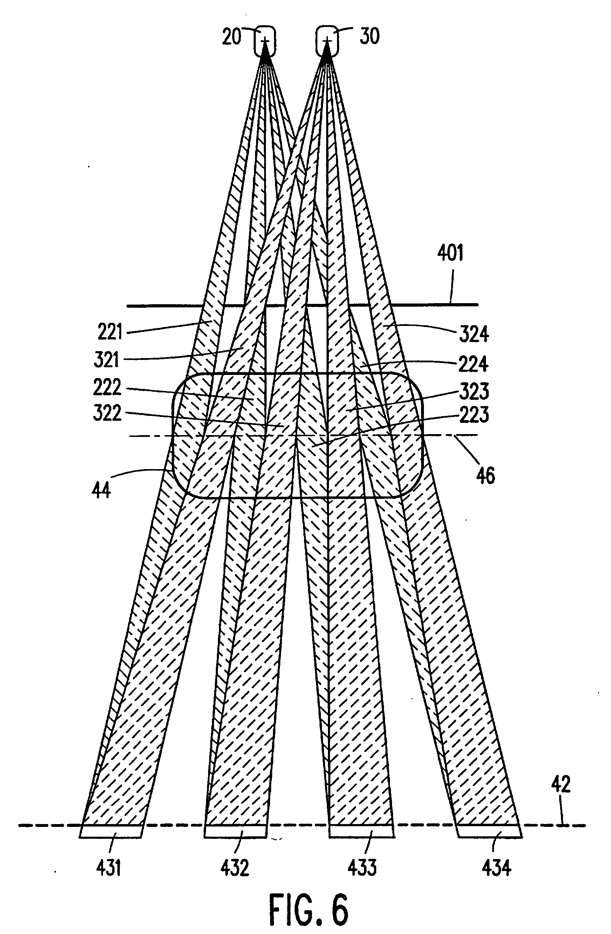

Der in Fig. 4 dargestellte Detektor zeigt in einer Draufsicht den Aufbau aus zwölf ringförmigen, konzentrisch den Mittelpunkt 48 umschließenden Elementen 1...12. Die verschiedenen Elemente 1...12 dienen dazu, die Streustrahlung aus verschiedenen Abschnitten des Untersuchungsbereichs getrennt zu erfassen, d.h. die Anzahl der auf sie auftreffenden Röntgenquanten energieaufgelöst zu messen. Die Abschnitte des Untersuchungsbereichs sind dabei parallel zur Detektorebene 42 (siehe Fig. 1) verlaufende Schichtebenen und jeweils ein Bereich um diese Schichtebenen herum.

Da der Impulsübertrag dem Produkt aus dem Sinus des halben Streuwinkels und der Energie des elastisch gestreuten Röntgenquants proportional ist und der Streuwinkel bekannt ist, unter dem ein bestimmtes Detektorelement 1...12 Streustrahlung aus dem ihm zugeordneten Abschnitt des Untersuchungsbereichs erfaßt, läßt sich für jedes Detektorelement 1...12 ein Impulsübertragsspektrum berechnen, wie es in der DE-A 42 22 227 beschrieben ist. Diese Berechnung soll deshalb hier nicht noch einmal im einzelnen erläutert werden.

Das Detektorelement 5, das in die halbringförmigen Teilelemente 5A und 5B mit den Kontaktstellen 5C und 5D aufgeteilt ist, erfaßt die Streustrahlen 26 und 27 bzw. 36 und 37 (siehe Fig. 1) derart, daß auf das halbringförmige Teilelement 5A nur die Streustrahlen 26 und 27, auf das Teilelement 5B nur die Streustrahlen 36 und 37 treffen. Allgemeiner gesagt bedeutet dies, daß Streustrahlung, welche vom Primärstrahlenbündel 22 (siehe Fig. 1) erzeugt wird, nur auf die Detektorteilelemente oberhalb der mit E angedeuteten Ebene des in Fig. 4 gezeigten Detektors fällt, während die vom Strahlenbündel 32 (siehe Fig. 1) erzeugte Streustrahlung nur auf die unterhalb der mit E angedeuteten Ebene liegenden Detektorteilelemente fällt.

Damit das Impulsübertragungsspektrum möglichst genau bestimmt werden kann, muß der Streuwinkel, den die von einem bestimmten Detektorelement erfaßte Streustrahlung mit dem zugehörigen Primärstrahl einschließt, möglichst genau definiert sein. Deshalb sollte nur solche Streustrahlung von einem bestimmten Detektorelement registriert werden, bei der der Streustrahl in der Ebene verläuft, die durch den ihn hervorrufenden Primärstrahl und die Strahlachse dieses Primärstrahls definiert wird, zumindest aber um einen sektorförmigen Bereich um diese Ebene herum. Um die übrige Streustrahlung zu unterdrücken, sind zwischen dem Untersuchungsbereich und dem Detektor zwei Kollimatoranordnungen vorgesehen. Diese sind in Fig. 1 der Übersichtlichkeit halber weggelassen und in Fig. 5 in einer Schnittdarstellung gezeigt.

Die Kollimatoranordnungen bestehen im wesentlichen aus je einer entlang der Rohrmittelachse halbierten Rohrhälfte 28 und 38 aus Röntgenstrahlung absorbierendem Material. Diese Rohrhälften 28 und 38 sind durch eine metallische, Röntgenstrahlung absorbierende Trennwand 49, die in der Zeichenebene der Fig. 1 liegt, getrennt und sind um die Kollimatorachse 243 bzw. 343, durch die die Strahlachse 23 bzw. 33 (siehe Fig. 1) verläuft, angeordnet. An der Innenseite der Rohrhälften 28 und 38 sind in gleichmäßigem Abstand voneinander Lamellen 29 bzw. 39 angebracht, die radial auf die Kollimatorachse 243 bzw. 343 ausgerichtet sind.

Die Röntgenstrahler 20 und 30 in Fig. 1 sind in einem Abstand voneinander angeordnet, der in etwa dem doppelten Durchmesser eines halbkegelförmigen Primärstrahlenbündels in der Ebene 46 entspricht, der im gezeigten Fall etwa 90 mm beträgt. Wie erkennbar ist, stehen die Strahlachsen 22 und 32 nicht senkrecht auf der Detektorebene 42. Der Streuwinkel wird dadurch zwar um einen Faktor, der etwa dem Kosinus des Winkels zwischen Strahlachse und Senkrechter auf der Detektorebene 42 entspricht, verringert gegenüber dem Streuwinkel bei der aus der DE-A 42 22 227 bekannten Anordnung, bei der die Strahlachse senkrecht auf der Detektorebene steht. Für einen maximal möglichen Winkel zwischen Strahlachse und Senkrechter auf der Detektorebene von 15° ergibt sich aber lediglich eine vernachlässigbare Verringerung des Streuwinkels um etwa 3%, so daß insgesamt gesehen die Auswirkungen, die die nicht senkrecht auf der Detektorebene 42 stehenden Strahlachsen auf den Streuwinkel haben, unberücksichtigt bleiben können.

Während bei der aus der DE-A 42 22 227 bekannten Anordnung ein kegelförmiger Bereich der Breite 90 mm untersucht wird, ermöglicht es die hier beschriebene Anordnung, gleichzeitig zwei halbkegelförmige Bereiche, die in der Ebene 46 der Fig. 1 eine Breite von jeweils 90 mm aufweisen und dort aneinandergrenzen, zu untersuchen.

Eine besonders vorteilhafte Ausgestaltung der Erfindung ist in Fig. 6 dargestellt. Dabei sind vier Detektoren 431 bis 434 vorgesehen, und die Primärblendenanordnung weist acht halbringförmige Schlitzöffnungen in einer Primärblendenplatte 401 auf. Die Detektoren 431 bis 434 sind derart in der Detektorebene 42 angeordnet, daß deren ringförmige Elemente jeweils einen Schnittpunkt zweier durch je einen Röntgenstrahler 20 bzw. 30 verlaufender Strahlachsen konzentrisch umgeben. Diese Schnittpunkte sind so gewählt, daß in der Ebene 46 die acht halbkegelförmigen Primärstrahlenbündel 221 bis 224 und 321 bis 324 versetzt nebeneinanderliegen und direkt aneinandergrenzen.

Die in Fig. 7 dargestellte Primärblendenplatte 401 weist acht halbringförmige Schlitzöffnungen auf, von denen drei dem nicht dargestellten Röntgenstrahler 20 zugeordnete Schlitzöffnungen 212 bis 214 genau an drei dem Röntgenstrahler 30 zugeordnete Schlitzöffnungen 312 bis 314 grenzen, so daß sich daraus drei kreisringförmige Schlitzöffnungen ergeben. Die beiden außen angeordneten halbringförmigen Schlitzöffnungen 211 und 311 grenzen nicht an eine zweite dem jeweils anderen Röntgenstrahler zugeordnete halbringförmige Schlitzöffnung. Die Punkte 51 bis 53 sind Schnittpunkte zweier durch je einen der Röntgenstrahler 20 und 30 verlaufender Strahlachsen und gleichzeitig Mittelpunkte der drei kreisringförmigen Schlitzöffnungen 212/312 bis 214/314. Durch die Punkte 50 und 54 verläuft jeweils nur eine Strahlachse durch einen der Röntgenstrahler 20 oder 30.

Nicht dargestellt in der Fig. 6 sind die Sekundärblendenanordnungen und die Kollimatoranordnungen, die wie in den Figuren 3 bzw. 5 gezeigt aufgebaut sind mit dem Unterschied, daß hier vier derartige Anordnungen zwischen dem Untersuchungsobjekt 44 und der Detektorebene 42 angeordnet sind. Jedem Paar von Primärstrahlenbündeln 221, 321 bis 224, 324 sind mindestens zwei in Fig. 3 dargestellte halbringförmige sekundäre Schlitzöffnungen und zwei in Fig. 5 dargestellte Kollimatoranordnungen zugeordnet.

Erreicht wird bei dieser Ausgestaltung eine Verbreiterung des Bereichs, der gleichzeitig untersucht werden kann, etwa um den Faktor acht gegenüber der aus der DE-A 42 22 227 bekannten Anordnung. Die Breite von 700 mm, die als Obergrenze für die Breitenabmessung eines zu untersuchenden Gepäckstücks gilt, ist damit erreicht, und es kann die mäanderförmige Abtastbewegung zur zeitlich nacheinander erfolgenden Untersuchung aller Bereiche des Objekts durch eine eindimensionale Abtastbewegung, bei der das Untersuchungsobjekt nur noch linear in einer Richtung gegenüber der Untersuchungsanordnung bewegt werden muß, ersetzt werden. Dies verringert zudem den Aufwand für die Bewegungsvorrichtung, beispielsweise ein Förderband, und führt zu einer wesentlichen Zeitersparnis etwa um den Faktor acht. Während bei der bekannten Anordnung die Untersuchung eines großen Gepäckstücks bis zu etwa zwanzig Sekunden dauert, wird mit dieser Ausgestaltung der erfindungsgemäßen Anordnung die angestrebte Zeit von sechs Sekunden für die Untersuchung eines Objekts deutlich unterschritten.

In Fig. 8 ist eine weitere Ausgestaltungsmöglichkeit einer Primärblendenplatte 402 dargestellt. Mit 55 und 57 sind die Schnittpunkte zweier Strahlachsen, die durch den nicht dargestellten Röntgenstrahler 20 verlaufen, mit der Primärblendenplatte 402 gekennzeichnet und mit 56 und 58 die Schnittpunkte zweier durch den ebenfalls nicht dargestellten Röntgenstrahler 30 verlaufender Strahlachsen. Die Position der Röntgenstrahler 20 und 30 senkrecht in einem Abstand über der Primärblendenplatte 402 ist durch die Punkte 201 bzw. 301 angedeutet, welche sich durch senkrechte Projizierung der Position der Röntgenstrahler 20 bzw. 30 auf die Primärblendenplatte 402 ergeben. In der mit E1 angedeuteten Ebene liegen die durch die Schnittpunkte 55 und 56 und jeweils einen der Röntgenstrahler verlaufenden Strahlachsen. Entsprechend liegen in der mit E2 angedeuteten Ebene die durch die Schnittpunkte 57 und 58 und je einen der Röntgenstrahler verlaufenden Strahlachsen. Die Streustrahlung der von den halbringförmigen Schlitzöffnungen 215 und 315 ausgeblendeten Primärstrahlenbündel wird mit Hilfe einer nicht dargestellten Sekundärblendenanordnung auf einen ersten Detektor geführt, die Streustrahlung der von den Schlitzöffnungen 216 und 316 ausgeblendeten Primärstrahlenbündel wird auf einen zweiten Detektor geführt.

Bei dieser Ausgestaltung wird der gleichzeitig durchstrahlte Untersuchungsbereich nicht nur in einer Richtung verbreitert, sondern auch in dazu senkrechter Richtung vergrößert. In Variation dieser Ausgestaltung können die halbringförmigen Schlitzöffnungen derart angeordnet sein, daß der Winkel zwischen einer senkrecht auf der Primärblendenplatte 402 stehenden Gerade durch einen der Röntgenstrahler und einem Primärstrahl der von diesem Röntgenstrahler ausgehenden Röntgenstrahlung maximal 15° beträgt.

Wie bei der aus der DE-A 42 22 227 bekannten Anordnung können auch bei der erfindungsgemäßen Anordnung an den Schnittpunkten der Strahlachsen mit den primären und sekundären Blendenanordnungen kleine Bohrungen vorgesehen sein, um die Intensität eines sogenannten Zentralstrahls jedes halbkegelförmigen Primärstrahlenbündels, der in seinem Verlauf mit dem Verlauf der Strahlachse übereinstimmt, messen zu können. Dafür ist innerhalb des innersten Detektorrings in jedem Detektor ein kleiner Bereich als Meßbereich vorgesehen. Diese Messungen dienen dazu, die Meßergebnisse der einzelnen Detektorelemente auf das Meßergebnis des Zentralstrahls zu normieren und dadurch die Absorption der Strahlung im Untersuchungsbereich zu berücksichtigen.

Weiterhin kann die Sekundärblendenanordnung auch aus mehreren ebenen Sekundärblendenplatten mit im wesentlichen halbringförmig ausgebildeten Schlitzöffnungen bestehen.

## Patentansprüche

1. Anordnung zum Messen des Impulsübertragsspektrums von elastisch aus einem Untersuchungsbereich gestreuten Röntgenquanten mit
- einem Röntgenstrahler (20) zur Erzeugung von polychromatischer Röntgenstrahlung
- einem die gestreuten Röntgenquanten erfassenden Detektor (43), welcher mehrere ringförmige, konzentrisch einen Detektor-Mittelpunkt ((48) in einer Detektorebene (42) umschließende Detektorelemente aufweist,
- einer zwischen dem Röntgenstrahler (20) und dem von der Röntgenstrahlung durchsetzten Untersuchungsbereich angeordneten, eine primäre Schlitzöffnung (21) aufweisenden Primärblendenanordnung (40) zum Ausblenden eines Primärstrahlenbündels (22),
- einer zwischen dem Untersuchungsbereich und dem Detektor (43) angeordneten, mindestens eine sekundäre Schlitzöffnung (25) aufweisenden Sekundärblendenanordnung (47),
wobei die primäre und die sekundären Schlitzöffnungen (21, 25) im wesentlichen koaxial zu einer den Röntgenstrahler (20) und den Detektor-Mittelpunkt (48) verbindenden Strahlachse angeordnet sind,
**dadurch gekennzeichnet, daß** ein zweiter Röntgenstrahler (30) vorgesehen ist, welcher im wesentlichen in gleich großem Abstand von der Detektorebene (42) wie der erste Röntgenstrahler (20) derart angeordnet ist, daß eine den zweiten Röntgenstrahler (30) und den Detektor-Mittelpunkt (48) verbindende zweite Strahlachse (33) die erste Strahlachse unter einem Winkel schneidet und mit dieser ein Strahlachsenpaar bildet, daß beiden Strahlachsen primäre und sekundäre Schlitzöffnungen (21, 31, 25, 35) zugeordnet sind und daß alle sich um die erste Strahlachse (23) erstreckenden primären und sekundären Schlitzöffnungen (21, 25) in entgegengesetzter Richtung zu der von dem Strahlachsenpaar definierten Ebene (E) geöffnet sind wie die sich um die zweite Strahlachse (33) erstreckenden primären und sekundären Schlitzöffnungen (31, 35), wobei die beiden Enden (z.B. S₂₁, S₂₂) jeder halbringförmigen Schlitzöffnung (21) etwa in der von dem Strahlachsenpaar definierten Ebene (E) liegen.

2. Anordnung nach Anspruch 1, **dadurch gekennzeichnet, daß** die Durchmesser der primären Schlitzöffnungen (21, 31) derart gewählt sind, daß das erste Primärstrahlenbündel (22), das durch die primäre Schlitzöffnung (21) ausgeblendet wind, welche sich um die erste Strahlachse (23) erstreckt, im Untersuchungsbereich an das zweite Primärstrahlenbündel (33)grenzt, das durch die primäre Schlitzöffnung (31) ausgeblendet wird, welche sich um die zweite Strahlachse (33) erstreckt.

3. Anordnung nach Anspruch 1 oder 2, **dadurch gekennzeichnet, daß** sich die primären und/oder die sekundären Schlitzöffnungen (21,31; 25,35) jeweils in einer einzigen ebenen Blendenplatte (40; 47) befinden.

4. Anordnung nach einem der vorhergehenden Ansprüche, **dadurch gekennzeichnet, daß** die sekundären Schlitzöffnungen(25, 25) so angeordnet sind, daß die im wesentlichen in einer parallel zur Detektorebene (42) liegenden Ebene (z.B. 46)des Untersuchungsbereichs gestreute Streustrahlung des ersten Primärstrahlenbündels (22) auf dasselbe ringförmige Element (z.B. 5). eines Detektors gelangt wie die in der gleichen Ebene im Untersuchungsbereich gestreute Streustrahlung des zweiten Primärstrahlenbündels (32).

5. Anordnung nach einem der vorhergehenden Ansprüche, **dadurch gekennzeichnet, daß** zwischen dem Untersuchungsbereich und dem Detektor (43) zwei jeweils einer Strahlachse (23, 33) zugeordnete Kollimatoranordnungen (28, 38) mit die Röntgenstrahlung absorbierenden Lamellen (29, 39) vorgesehen sind und daß die Lamellen in Ebenen liegen, die eine Strahlachse enthalten.

6. Anordnung nach Anspruch 5, **dadurch gekennzeichnet, daß** die Lamellen der beiden Kollimatoranordnungen (28, 38) durch eine metallische Trennwand (49) getrennt sind, die in einer Ebene verläuft, in der die beiden Strahlachsen liegen.

7. Anordnung nach einem der vorhergehenden Ansprüche, **dadurch gekennzeichnet, daß** mindestens ein weiterer Detektor (431....434) vorgesehen ist und daß die Primärblendenanordnung je Detektor zwei Schlitzöffnungen (211..214, 311...314) aufweist.

8. Anordnung nach Anspruch 7, **dadurch gekennzeichnet, daß** alle primären (211..214, 311...314) und sekundären Schlitzöffnungen und alle Detektoren (431.....434) derart angeordnet sind, daß alle die beiden Röntgenstrahler mit den Mittelpunkten der Detektoren verbindenden Strahlachsen in einer einzigen Ebene (E) liegen.

9. Anordnung nach Anspruch 8, **dadurch gekennzeichnet, daß** vier Detektoren (431....434) vorgesehen sind und daß die Primärblendenanordnung acht Schlitzöffnungen (211..214, 311...314) aufweist.

## Claims

1. An arrangement for measuring the momentum transfer spectrum of elastically scattered X-ray quanta from an examination zone, comprising
- an X-ray source (20) for generating polychromatic X-rays,
- a detector (43) which detects the scattered X-ray quanta and comprises a plurality of annular detector elements which concentrically enclose a detector center (48) in a detector plane (42),
- a primary diaphragm device (40) which is arranged between the X-ray (20) source and the examination zone irradiated by the X-rays and comprises a primary slit aperture (21) for forming a primary radiation beam (22),
- a secondary diaphragm device (47) which is arranged between the examination zone and the detector (43) and comprises at least one secondary slit aperture (25),
the primary and secondary slit apertures (21, 25) being arranged essentially coaxially with respect to a beam axis connecting the X-ray source and the detector center (48), **characterised in that** there is provided a second X-ray source (30) which is situated at substantially the same distance from the detector plane (42) as the first X-ray source (20) and is arranged in such a manner that a second beam axis (33) which connects the second X-ray source (30) and the detector center (48) intersects said first beam axis at an angle and constitutes a pair of beam axes in conjunction therewith, that with both beam axes there are associated primary and secondary slit apertures (21, 31, 25, 35) and that all primary and secondary slit apertures (21, 25) extending around the first beam axis (23) open towards the plane (E) defined by the pair of beam axes in the opposite direction in comparison with the primary and secondary slit apertures (31, 35) extending around the second beam axis (33), both ends (for example, S21, S22) of each semi-annular slit aperture (21) being situated approximately in the plane (E) defined by the pair of beam axes.

2. An arrangement as claimed in Claim 1, **characterised in that** the diameters of the primary slit apertures (21, 31) are chosen so that the first primary radiation beam (22), formed by primary slit apertures (21) extending around the first beam axis (23), in the examination zone adjoins the second primary radiation beam (33), formed by the primary slit apertures (31) extending around the second beam axis (33).

3. An arrangement as claimed in Claim 1 or 2, **characterised in that** the primary and/or the secondary slit apertures (21, 31; 25, 35) are provided in a respective single, flat diaphragm plate (40; 47).

4. An arrangement as claimed in one of the preceding Claims, **characterised in that** the secondary slit apertures (25, 25) are arranged so that the scattered radiation of the first primary radiation beam (22), scattered essentially in a plane (for example, 46) of the examination zone which extends parallel to the detector plane (42), is incident on the same annular element (for example, 5) of a detector as the scattered radiation of the second primary radiation beam (32) which is scattered in the same plane in the examination zone.

5. An arrangement as claimed in any one of the preceding Claims, **characterised in that** two collimator devices (28, 38) which are associated with a respective beam axis (23, 33) and which comprise lamellae (29, 39) which absorb X-rays and are situated in planes containing a beam axis are arranged between the examination zone and the detector (43).

6. An arrangement as claimed in Claim 5, **characterised in that** the lamellae of the two collimator devices (28, 38) are separated from one another by a metallic partition (49) which extends in a plane in which the two beam axes are situated.

7. An arrangement as claimed in one of the preceding Claims, **characterised in that** it comprises at least one further detector (431 ... 434) and that the primary diaphragm device comprises two slit apertures (211 ... 214, 311 ... 314) for each detector.

8. An arrangement as claimed in Claim 7, **characterised in that** all primary (211 ... 214; 311 ... 314) and secondary slit apertures and all detectors (431 ... 434) are arranged in such a manner that all beam axes connecting the two X-ray sources to the detector centers are situated in a single plane (E).

9. An arrangement as claimed in Claim 8, **characterised in that** it comprises four detectors (431 ... 434) and that the primary diaphragm device comprises eight slit apertures (211 ... 214, 311 ... 314)

## Revendications

1. Dispositif pour mesurer le spectre de transmission d'impulsions de quanta de rayons dispersés élastiquement à partir d'une zone d'examen avec
- un générateur de rayons X (20) pour produire des rayons X polychromatiques,
- un détecteur (43) enregistrant les quanta de rayons diffusés qui présente plusieurs éléments détecteurs circulaires renfermant concentriquement un point central de détecteur (48) dans un plan de détecteur (42),
- un dispositif d'écran primaire (40) disposé entre le générateur de rayons X (20) et la zone d'examen traversée par les rayons X et présentant une ouverture en fente primaire (21) pour l'obturation d'un faisceau de rayons primaires (22),
- un dispositif d'écran secondaire disposé entre la zone d'examen et le détecteur (43) et présentant au moins une ouverture en fente secondaire (25),
les ouvertures en fente primaires et secondaires (21, 25) étant disposées sur un axe de rayonnement reliant de manière essentiellement coaxiale l'un des générateurs de rayons X (20) et le point central du détecteur (48),
**caractérisé en ce qu'**il est prévu un deuxième générateur de rayons X (30) qui est disposé essentiellement dans le même grand intervalle par rapport au plan du détecteur (42) que le premier générateur de rayons X (20) de telle sorte qu'un deuxième axe de rayonnement (33) reliant le deuxième générateur de rayons X (30) et le point central du détecteur (48) coupe le premier axe de rayonnement dans un angle et forme avec celui-ci une paire d'axes de rayonnement, que des ouvertures en fente primaires et secondaires (21, 31, 25, 35) sont affectées aux deux axes de rayonnement et que toutes les ouvertures en fente primaires et secondaires (21, 25) s'étendant autour du premier axe de rayonnement (23) sont ouvertes en direction opposée au plan (E) défini par la paire d'axes de rayonnement comme les ouvertures en fente (31, 35) primaires et secondaires s'étendant autour du deuxième axe de rayonnement (33), les deux extrémités (p.ex. S₂₁, S₂₂) de chaque ouverture en fente semi-circulaire (21) se trouvant approximativement dans le plan (E) défini par la paire d'axes de rayonnement.

2. Dispositif selon la revendication 1, **caractérisé en ce que** les diamètres des ouvertures en fente primaires (21, 31) sont choisis de telle sorte que le premier faisceau de rayons primaires (22) qui est diaphragmé par l'ouverture en fente (21) primaire qui s'étend autour du premier axe de rayonnement (23) est adjacent dans la zone d'examen du deuxième faisceau de rayons primaire (33) qui est diaphragmé par l'ouverture en fente (31) primaire qui s'étend autour du deuxième axe de rayonnement (33).

3. Dispositif selon l'une des revendications 1 ou 2, **caractérisé en ce que** les ouvertures en fente primaires et/ou secondaires (21, 31; 25, 35) se trouvent respectivement dans une seule plaque d'écran plane (40, 47).

4. Dispositif selon l'une des revendications précédentes, **caractérisé en ce que** les ouvertures en fente secondaires (25, 25) sont disposées de telle sorte que le rayonnement diffusé du premier faisceau de rayons primaires (22), diffusé essentiellement dans un plan (p.ex. 46) disposé parallèlement au plan du détecteur (42) de la zone d'examen parvient sur le même élément circulaire (p.ex., 5) d'un détecteur que le rayonnement diffusé du deuxième faisceau de rayons primaire (32), diffusé dans le même plan dans la zone d'examen.

5. Dispositif selon l'une des revendications précédentes, **caractérisé en ce que** deux dispositifs collimateurs (28, 38) affectés respectivement à un axe de rayonnement avec des lamelles (29, 39) absorbant les rayons X sont prévus entre la zone d'examen et le détecteur (43) et que les lamelles sont situées dans des plans qui contiennent un axe de rayonnement.

6. Dispositif selon la revendication 5, **caractérisé en ce que** les lamelles des deux dispositifs collimateurs (28, 38) sont séparées par une cloison de séparation (49) métallique qui s'étend dans un plan dans lequel sont situés les deux axes de rayonnement.

7. Dispositif selon l'une des revendications précédentes, **caractérisé en ce qu'**au moins un détecteur supplémentaire (431 ... 434) est prévu et que le dispositif d'écran primaire présente deux ouvertures en fente (211 ... 214, 311 ... 314) par détecteur.

8. Dispositif selon la revendication 7, **caractérisé en ce que** toutes les ouvertures en fente primaires (211 ... 214, 311 ... 314) et secondaires et tous les détecteurs (431 ... 434) sont disposés de telle sorte que tous les axes de rayonnement reliant les deux générateurs de rayons X avec les points centraux des détecteurs se situent dans un seul plan (E).

9. Dispositif selon la revendication 8, **caractérisé en ce que** quatre détecteurs (431 ... 434) sont prévus et que le dispositif d'écran primaire comprend huit ouvertures en fente (211 ... 214, 311 ... 314).
